# EUROPEAN PATENT SPECIFICATION

(11) **EP 2 729 388 B1**
(45) Date of publication and mention of the grant of the patent: **15.04.2015**
(21) Application number: 12748542.3
(22) Date of filing: 04.07.2012
(51) Int. Cl.: B65G 1/04, B65G 47/51

(54) **AUTOMATED SYSTEM FOR THE TEMPORARY STORAGE OF ITEMS**
AUTOMATISIERTES SYSTEM ZUR VORÜBERGEHENDEN AUFBEWAHRUNG VON GEGENSTÄNDEN
SYSTÈME AUTOMATIQUE POUR STOCKAGE TEMPORAIRE D'ARTICLES

(30) Priority: 06.07.2011 IT MI20111258
(43) Date of publication of application: 14.05.2014
(73) Proprietor: Emmeti S.P.A., 42027 Montecchio Emilia, REGGIO EMILIA (IT)
(72) Inventor: BIONDI, Paolo, I-42027 Montecchio Emilia (Reggio Emilia) (IT)
(74) Representative: Mozzi, Matteo
(86) International application number: PCT/IB2012/053419
(87) International publication number: WO 2013/005171

(56) References cited:
- WO-A1-01/10754
- WO-A1-99/55604
- WO-A1-03/006345
- WO-A1-2007/147546

## Description

The present invention relates to the temporary storage of items inside a warehouse and in particular to an automated system for the temporary storage of items.

For the purposes of the present description, items to be stored are understood to be bottles, cans, jars or pots made of glass, ceramic or plastic but also crates, boxes, bundles and so on. Such objects are typically stored empty, that is before being filled with the relative content, or full, after being filled with the relative content.

Plants producing empty bottles in plastic material exist which comprise a production system of the bottles (such as blowing of the plastic material), a temporary storage system inside a warehouse of empty bottles before filling. Such plant is generally provided with one or more conveyor belts each dedicated to the transport of one type of bottle (1 litre, 2 litre bottles and so on.) For example, the plant may be fitted with one or more multiformat conveyor belts fitted with adjustable guides to each move one type of bottle.

The storage system acts as a buffer between the bottle production system and the filling system which typically work at speeds and periods of time which may differ. For example, the functioning period of the production system of the bottles may be longer than the functioning period of the filling system in that the machines for blowing the bottles only work properly upon reaching certain temperatures so that it is opportune to use them continuously. In this case, a high degree of efficiency of the temporary storage system and high capacity of the warehouse is required.

Upstream of the warehouse, the temporary storage system is typically fitted with a palletisation /depalletisation unit configured to pick up from the conveyor belt a group of empty bottles positioned alongside each other so as to define a layer of bottles. The layers of bottles picked up each time from the conveyor belt are stacked above each other on a pallet so as to form a stack of stored bottles.

To protect the inside of the bottles, prevent the top of the same from being damaged by rubbing at the moment of positioning the subsequent layer and increase the stability of the stack, the palletisation/depalletisation unit is configured to position between one layer of bottles and the next a cardboard sheet and an aluminium tray (or other material, such as plastic sheets or trays) to contain the subsequent layer of bottles.

Once the stack has reached the established height (in some cases, even several metres), it is manually or automatically wrapped (by a wrapping machine) with a plastic film so that the bottles are further protected from dust and the stack is more compact and stable. Such stack is moved and arranged inside the warehouse in a position which the temporary storage system records in such a way that at the moment of having to empty the warehouse, the empty bottles stored first can easily be taken out first. This type of warehouse emptying system is also known by the acronym FIFO (FIRST IN, FIRST OUT). This is due to the fact that in order to prevent the deterioration and contamination of the inside of the bottles, the stored bottles must not remain in the warehouse too long, consequently those stored longest should be used first.

At the moment in which a layer of bottles must be taken out of the warehouse, the storage system identifies the position of the stack stored longest which is brought to the palletisation/depalletisation unit upstream of the warehouse. In this position, the plastic film is first removed manually or automatically (with the help of an unwrapping machine). Subsequently, the palletisation/depalletisation unit is configured to pick up the layer of bottles on the top of the stack and to position such layer on the conveyor belt for sending towards the filling system. In the depalletisation step such unit is also configured to remove the trays and sheets positioned between successive layers.

The storage system described above may be also used to temporarily store in a warehouse bottles filled with their content and sealed with a relative cap. In such case, the temporary storage system acts is located between a bottle filling system and a logistic sorting system of the filled bottles. In this case too, given the shelf life of the foods, the stack of bottles which has been in the warehouse the longest must be taken out first.

The temporary storage system described above is not without defects.

First of all, the palletisation/depalletisation unit is complex and expensive considering the operations for which it is configured: taking out the layer of bottles, positioning and removing the card sheets, positioning and removing the trays.

In addition, the positioning and manual or automatic removal by means of dedicated wrapping and unwrapping machines of the protective plastic film is required.

Moreover, the presence and maintenance of a large number of additional elements is required to ensure the protection and stability of the stack: card sheets, plastic or aluminium trays, plastic film.

Moreover, such elements entail an additional cost for their timely removal by the storage system once the stack has been depalletised and, more often than not, the trays and especially the card sheets are no longer reutilisable.

In addition, such a complex temporary storage system requires the presence of a sufficient number of operators to control the storage system, to recover the sheets and trays, to position and manually remove the plastic film and even for moving the stack from the palletisation/depalletisation unit to the warehouse and vice versa.

In addition, the fact that the palletisation/depalletisation unit is located upstream of the warehouse means that a stack to be depalletised must necessarily be brought back to such position and consequently the empty loose bottles still have to travel a long way along the conveyor belt towards the filling system, entailing a significant increase in the time needed to take out the empty bottles.

Lastly, it is to be noted also that the formation of a stack several metres high poses some problems to the storage system.

In fact, the weight of a stack of such size may cause the inevitable deformation of the empty bottle (partially also of the full bottles) positioned in the lower layers of such stack. In addition, a stack of such height must be moved with some caution, therefore more slowly, so as not to prejudice the safety of the storage system operators and of the stored bottles.

Also, if the layer of bottles situated at the bottom of a stack needs to be sent towards the filling system, the entire stack needs to be depalletised starting obviously from the top layer. This results in a waste of the elements composing the stack, of time and of the operators responsible.

WO 01/10754 A1, WO 99/55604 A1, WO 2007/147546 A1 refer to storage systems belonging to the prior art, and corresponding to the preamble of claim 1.

The object of the present invention is to excogitate and make available an automated system for the temporary storage of items which makes it possible to at least partially overcome the drawbacks spoken of above with reference to the prior art and which in particular permits a high level of reliability, safety and protection of the items to be achieved at limited costs and storage handling times.

Such object is achieved by means of an automated storage system for the temporary storage of items according to claim 1.

Preferred embodiments of such system are defined in the dependent claims 2-13.

Further characteristics and advantages of the automated temporary storage system according to the invention will be evident from the description given below of its preferred embodiments, made by way of a non-limiting example, with reference to the following figures wherein:

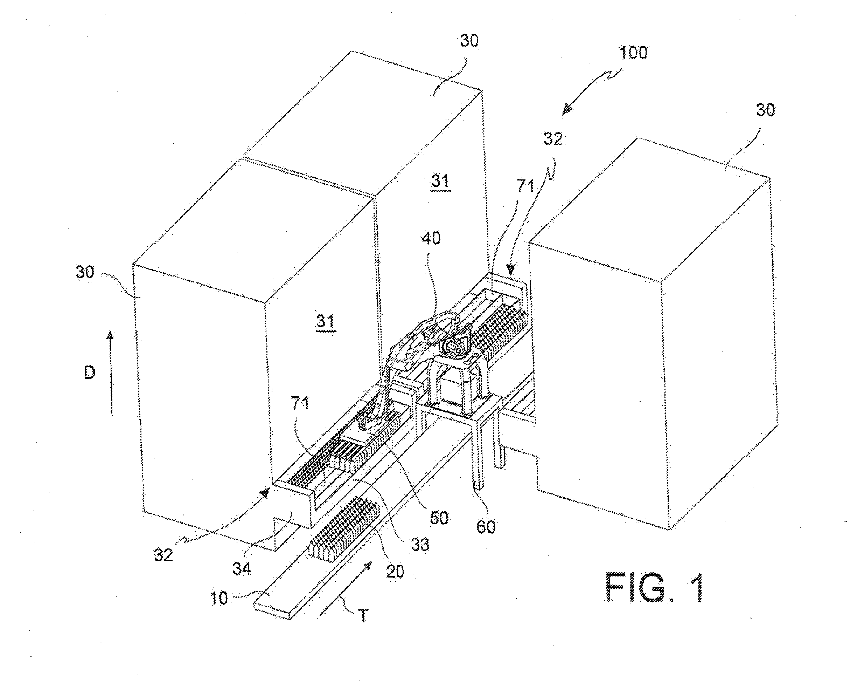

- figures 1 and 2 schematically show a perspective view of an automated system for the temporary storage of items according to one example of the invention;
- figure 3 schematically shows a side view of the system in figure 2, and
- figure 4 schematically shows a view from above of the system in figure 2.

With reference to the aforementioned figures, an automated system 100 for the temporary storage of items, hereinafter also solely system, according to one example of the invention will now be described.

In the drawings analogous elements have been indicated using the same reference numerals.

"Temporary" storage is taken to mean the storage of items for a defined period of time, after which they are removed from the warehouse to continue along the production or distribution line. Typically a "temporary" storage system acts as a buffer between two systems handling the items, positioned respectively upstream and downstream of the storage system, which function at different speeds or for different periods of time. In fact, within an industrial production process, the temporary storage system acts so as to compensate the different speed or different period of functioning of the system located upstream and the system located downstream, respectively, in relation to it.

In addition, for the purposes of the present description, items to be stored are understood to be bottles, cans, jars or pots made of glass, ceramic or plastic but also crates, boxes, bundles and so on. Such items may be empty, that is without the relative content, or full, that is filled with the relative content.

In the example in the figures, reference will be made to items such as empty bottles to be stored between a production system of such bottles, for example utilising the blowing of plastic material, positioned upstream of the automated storage system 100 and a filling system of such bottles positioned downstream of the automated storage system 100. Neither such bottle manufacturing system nor such bottle filling system have been shown in the drawings inasmuch as known and not part of the present invention.

In the case in which the items are for example filled bottles, the automated storage system may be advantageously used positioned for example between a bottle filling system and a logistic bottle distribution system.

The system 100 comprises at least one conveyor belt 10, in itself known, of items 20, such as empty bottles. Such conveyor belt 10 has a main direction of transport T.

In the example in the figures, such bottles 20 are positioned alongside one another to define a so-called layer of items to be stored.

According to another embodiment, the conveyor belt 10 may be provided with several conveyor lines wherein a defined number of bottles corresponding to a row of the layer to be formed, is conveyed on each line. In such case, the layer of bottles is formed by storing and positioning the rows of bottles corresponding to the same layer alongside each other, as will be explained further below.

The system 100 further comprises at least one storage room 30 of said items 20, which will be described in further detail below.

In addition, the system 100 comprises a mechanical unit 40 for moving such items configured to transfer said items from the conveyor belt 10 to the storage room 30. Such mechanical movement unit 40 is also configured to transfer such items 20 from the storage room 30 to the conveyor belt 10.

In greater detail, the mechanical movement unit 40 is for example a robotised articulated arm (or alternatively Cartesian type) the free end of which is fitted with a movement head 50 comprising gripping and release means (such as jaws or pincers) of items. This way, the movement head 50 is configured to position itself above the layer of items 20 to be moved, in such a way as to engage such gripping and release means with the items. In the case of bottles, such gripping and release means are configured to engage preferably with the neck of the bottles.

The mechanical movement unit 40 is mounted on a support structure 60, such as a table, positioned above the conveyor belt 10 so that the mechanical movement unit 40 does not obstruct the normal path of the items 20 on the conveyor belt.

To such purpose, the mechanical movement unit 40 is configured to permit the movement head 50 to reach the items both upstream of the support structure 60 and so as to be able to access said storage room of the items 30, whether placed upstream or downstream of the support structure 60.

The maximum distance which can be reached by the movement head 50 depends on the length and width of the compartments, which can be chosen and sized as needed. For example, a compartment of the plurality of compartments 70 may be a maximum length of 3m and a maximum width of about 1.5m.

The mechanical movement unit 40 further comprise a respective programmable electronic controller (not shown in the figures), such as a Programmable Logic Controller (PLC), configured to automatically operate the mechanical movement unit 40.

Turning back to said at least one storage room 30, it extends vertically from the floor in a main extension direction D. Such at least one storage room 30 is for example a cabinet having an access wall 31 facing the conveyor belt 10 and preferably parallel to the main direction of transport T of the conveyor belt 10.

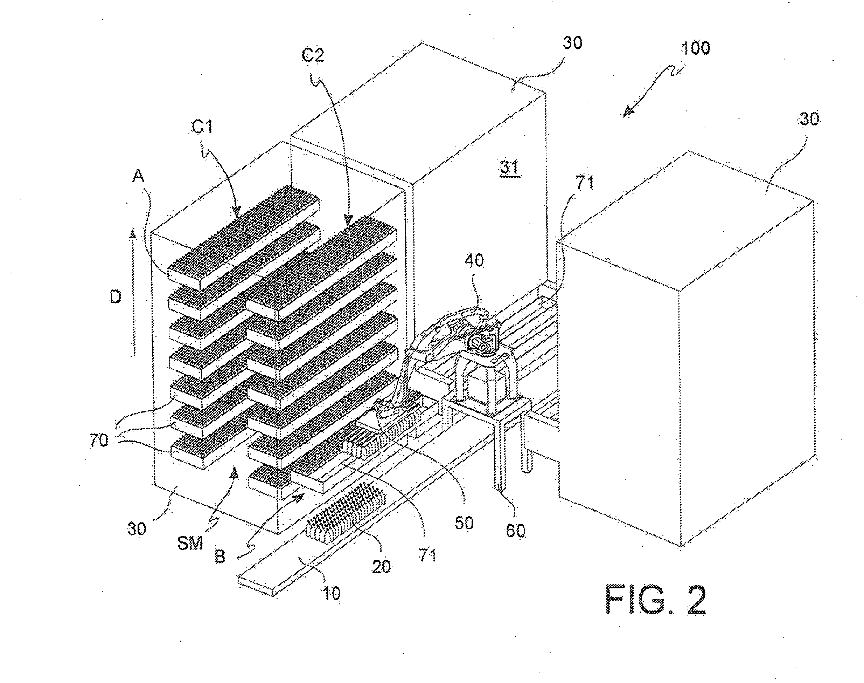

Such at least one storage room 30 comprises a plurality of removable compartments 70 to contain said items (shown for example in figure 2).

In greater detail, such plurality of compartments 70 is distributed inside such at least one storage room 30 so that such groups of compartments are lined up with each other in a main direction of extension D of the storage room 30 in one or more columns.

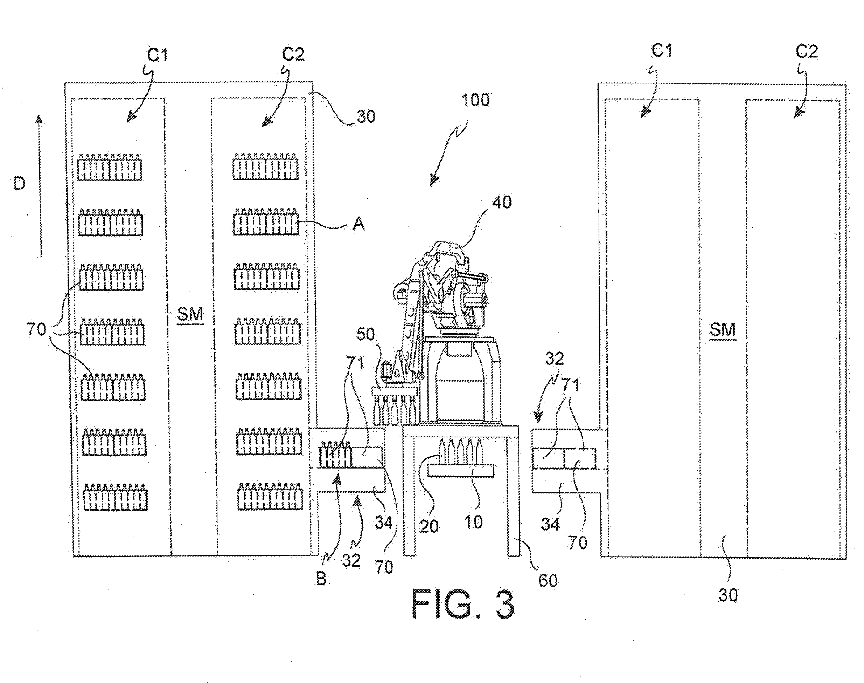

In the example in the figures, in particular in figures 2-4, where the inside of said at least one storage room 30 is visible schematically, the plurality of compartments 70 is distributed in a first column C1 and a second column C2. Inside staid at least one storage room 30, at least one movement space SM of each compartment in the main direction of extension of the storage room is, in addition, further defined. In the example in the drawings, such movement space SM is positioned between the first column C1 and the second column C2.

Each compartment of said plurality of compartments 70 comprises a plurality of housings 71 to contain one or more layers of items.

In one embodiment, shown in the drawings, the housings of said plurality of housings 71 are the same size. In the example in the figures, each compartment 70 comprises four housings 71.

In other embodiments, the housings of said plurality of housings 71 are different sizes. By so doing, inside each storage room it is possible to archive in said at least one storage room 30 layers of items the number of which depends on the capacity of each compartment of the plurality of compartments 70, or on the capacity of each housing of the plurality of housings.

In addition, in this way, it may be possible to store different type of items inside the same storage room.

In addition, in this way it is advantageously possible to increase the versatility of said at least one storage room 30 and thereby of the automated storage system 100.

It is to be noted that each housing 71 of a compartment of the plurality of compartments 70 has a vertical perimetral rim such as to guarantee the layer of items housed in it sufficient stability during the movement of the compartment.

In an alternative embodiment, in the case in which the items to be moved are stable in themselves, each housing or even each compartment may be a simple flat surface without any vertical perimetral rim.

Such at least one storage room 30 comprises access means 32 to at least one compartment of the storage room 30. Such access means 32 are configured to define a filling/emptying position B of a compartment.

Such access means 32 are positioned on the access wall 31 at a height preferably corresponding to that of the conveyor belt 10.

Such access means 32 comprise an access plane 33 extending from the access wall 31 towards the conveyor belt 10 in a direction orthogonal to the main direction of transport T of the conveyor belt 10. The access plane 33 is also orthogonal to the main extension direction of the storage room D. Such access plane is defined by side walls 34 extending towards the conveyor belt 10 orthogonally to the main extension direction of the storage room 30. The access plane 33 and the respective side walls 34 are suitable for delimiting space in which to position a compartment placed inside said at least one storage room 30 so that it is accessible to the mechanical movement unit 40.

Each of the compartments of the aforesaid plurality of compartments 70 is configured to adopt an archive position A inside said at least one storage room 30, when positioned inside thereof, and a filling/emptying position B, when positioned inside the space delimited by the access means 32 described above.

To such purpose, such at least one storage room 30 comprises means for moving a compartment of the aforesaid plurality of compartments 70 from the archive position A to the filling/emptying position B and vice versa.

In greater detail, such means for moving (not shown in the drawings) comprise mechanisms and kinematisms of the known type such as to permit the individual compartment to translate in a direction orthogonal to the main extension direction D of the storage room 30 from the archive position A to a first intermediate movement position within the movement space SM and vice versa. Such first intermediate movement position is positioned at the same level as the archive position of the individual compartment.

In addition, such means for moving a compartment are configured to translate the individual compartment along the main extension direction D of the storage room within the movement space SM from the first intermediate position to a second intermediate position positioned at the same level as the access plane 33 and vice versa.

Again, such movement means of a compartment are configured to translate the individual compartment in a direction orthogonal to the main extension direction D of the storage room 30 from the second intermediate position to the filling/emptying position of the compartment at the access plane 33 and vice versa.

In addition, it is to be noted that such means for moving are advantageously configured to move one compartment independently of the other compartments of said plurality of compartments 70.

Such at least one storage room 30 comprises in addition a further electronic processor, not shown in the drawings, such as a PLC, configured to automatically operate the means for moving a compartment within such at least one storage room 30. In addition, such further electronic processor is configured to store in the respective memory unit, information representing the instant of time when a layer of items is housed inside one of the housings 71 of a compartment and further information representing the housing in which such layer of items has been accommodated (for example the respective archive position of such compartment).

This advantageously permits, at the moment of taking out a layer of items from said at least one storage room 30 for emptying of the compartment, to move the compartment of the plurality of compartments 70 which has been stored for the longest time (according to the FIFO logic) from the archive position A inside said storage room 30 to the filling/emptying position B.

In addition, the further electronic processor is configured to store information representing the position of the empty housings of the compartments so as to automatically trace the compartment of the plurality of compartments 70 to be moved from the archive position A to the filling/emptying position B.

With particular reference to the period of storage of a layer of items 20 inside said at least one storage room, it is to be noted that the storage system 100 according to the example of the invention works according to a FIFO logic (as said above) and is configured to have a maximum tolerance of one compartment. This advantageously makes it possible to have a minimum tolerance of the risk of items remaining stored in the reinsertion on the conveyor belt 10. In the case in which such layers of items were stacked on a pallet, as with the storage system of the prior art, the minimum tolerance of risk would be of a single stack, therefore of far more items, (up to several thousand even).

It is to be noted moreover that the electronic processor of the mechanical movement unit 40 and the further electric processor of said storage room 30 are configured in relation to one another so that the automatic operation of the movement unit 40 and of the means for moving a compartment inside such at least one storage room 30 are as synchronised as possible to the point of predisposing in the access means 32 of the storage room 30 a compartment to be emptied/filled while the mechanical movement unit 40 moves the movement head 50 at the point of the access means 32.

To such purpose, in a further embodiment, the mechanical movement unit 40 may be configured to pick up from the conveyor belt 10 not the entire layer of items but, in several goes, just one row of them so as to form the entire layer each time in a housing of the compartment positioned in the access means 32 of the storage room 30. Vice versa, the mechanical movement unit 40 is configured to pick up from a compartment of the plurality of compartments 70, not the entire layer of items present in the respective housing 71, but in several goes, only a row of them so as to form each time the layer of items on the conveyor belt 10.

At a general level it is to be noted that the conveyor belt 10 is preferably controlled by a respective electronic processor configured to operate its functioning, for example to block the movement of the belt at the moment in which a pick up/release operation of an entire layer of items begins and to unblock the belt once the pick up/release operation of the entire layer of items is terminated.

Returning once gain in general to said at least one storage room 30, it is to' be noted that it is a hermetically sealed environment suitable for advantageously protecting the stored items from impurities and dust without necessarily having to resort to additional protective elements such as plastic wraps, card sheets or trays.

In addition, the plurality of compartments 70 is distributed inside said at least one storage room 30 such that the distance between two compartments in the respective archive position, in the main extension direction of said at least one storage room 30, is substantially greater than the height of the layer of items accommodated in the compartment.

This advantageously makes it possible to prevent that during the movement of a compartment of layers of items, the upper part of the layer of items (such as the mouth of the bottles) comes into contact with the lower part of the compartment above in the same column.

In other words, when one compartment is moved inside the storage room 30, the upper part of the layers of item contained therein do not come into contact (for example rubbing against) the other compartments, avoiding damage to the items.

With reference again in general to the storage system 100 of the example in the, figures, it comprises in addition further storage rooms, also indicated by reference numeral 30, entirely similar to said at least one storage room 30 described above.

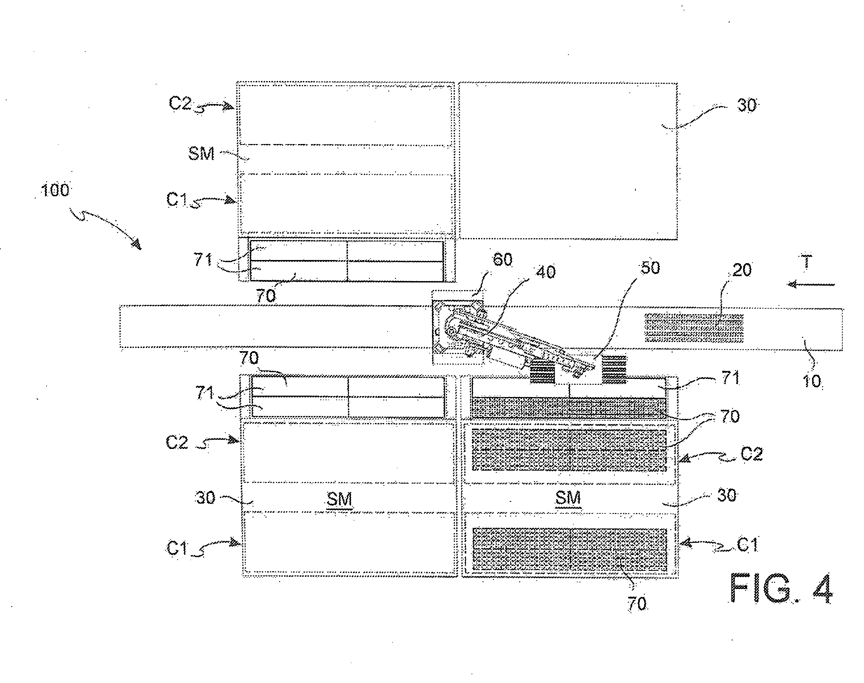

In greater detail, such storage rooms 30 are distributed in such a way that preferably the mechanical movement unit 40 is positioned in the centre of the storage system 100, as clearly visible in figure 4 wherein two storage rooms are to the left of the conveyor belt 10 and two are to the right of the conveyor belt 10. Such configuration advantageously makes it possible to use a mechanical movement unit 40 for example having a mechanical arm of limited size which succeeds equally in reaching the individual storage rooms 30.

To such purpose, the movement unit 40 is configured to move the movement head 50 both upstream and downstream of the support structure 60 despite the presence of the storage rooms 30.

The use of several storage rooms 30 makes it possible for example to use the automated temporary storage system 100 to advantageously store items which are different from each other, for example, in the case of the empty bottles, one storage room may be used to store the 1 litre bottles, a further storage room may be used to store the 2 litre bottles, and so on.

With reference to the aforementioned figures, the operation of the automated temporary storage system 100 according to one example of the invention is now described.

A layer of items 20, such as bottles, to be temporarily stored in a storage room 30 moves along the conveyor belt 10.

At the moment in which the layer of items 20 arrives next to the mechanical movement unit 40, upon blocking of the conveyor belt 10 at the command of the relative electronic processor, the mechanical movement unit 40 positions the respective movement head 50 above the layer of items 20 and lowers it so as to engage the respective gripping and release means (jaw or pincers) with the items (neck of the bottles).

The mechanical movement unit 40 moves the layer of items 20 from the conveyor belt 10 to the access means 32 of the storage room 30. During the movement of the layer of items 20, at the command of the further electronic processor which the storage room 30 is provided with, the means for moving a compartment move a compartment of the plurality of compartments 70 from the archive position A to the filling/emptying position B defined by the access means 32 of the storage room.

At this point, the mechanical movement unit 40 releases such layer of items 20 inside a housing 71 of the compartment. At the same time, the further electronic processor of the storage room 30 stores in its respective memory unit the information representing the instant of time when a layer of items 20 was housed inside the housing of the compartment and further information representing the housing in which such layer of items has been accommodated (for example the information representative of the archive position of such compartment).

This procedure preferably continues until all the housings of one compartment have been filled.

When the compartment has been completed, the further electronic processor of the storage room 30 commands the movement means of a compartment to move the filled compartment from the filing /release position B to the respective archive position A inside the storage room 30.

Conversely, in the case in which a layer of items 20 is to be taken out of the storage room 30 and replaced on the conveyor belt 10, the further electronic processor of the storage room 30 selects from the memory unit both the information representing the housing of the compartment in which a layer of items 20 has been stored longest and the information representative of such housing (for example the archive position of the respective compartment).

On the basis of such information, the further electronic processor commands the movement means of a compartment to move said compartment from the archive position A to the filling/movement position B. At the same time, at the command of the respective electronic processor, the mechanical movement means 40 positions the movement head 50 on the layer of items 20 to be taken out and using the gripping and release means picks up the layer of items and puts it on the conveyor belt 10.

As may be seen the object of the invention is fully achieved in that the automated temporary storage system according to the invention comprises a storage room of layers of items which makes it possible to store such layers independently of one another avoiding the contact thereof and thereby rubbing with the layer above or below. In addition, considering that the layers of items are no longer stacked on top of each other, the possibility that a layer of items may be deformed by the weight exerted by a higher layer of items (as happens in the traditional stacks of layers on pallets) is reduced if not substantially eliminated.

In addition, the particular configuration of the storage room enables the automated storage system to insert or remove a specific single layer of items at a time without the need to remove the adjacent layers, considerably reducing the time needed to store and take out the layers.

Again, the automated storage system is configured so as to drastically reduce the presence of operators needed to control the system and thereby reduces costs.

In addition, the maintenance costs of the system are also reduced in that the particular conformation of the storage room does not require the use and subsequent disposal of additional protective elements of the layers of items, such as card sheets, aluminium trays and plastic film for wrapping.

Lastly, the mechanical movement unit used is less costly and complex than that of the prior art in that it is not destined to perform further operations such as positioning and/or removing the sheets and trays between one layer and the next and wrapping and destroying the plastic film around the entire stack of layers.

A person skilled in the art may make modifications and adaptations to the automated temporary storage system described above, replacing elements with others technically equivalent so as to satisfy contingent requirements while remaining within the scope of protection of the following claims. Each of the characteristics described as belonging to a possible embodiment may be realised independently of the other embodiments described.

## Claims

1. An automated storage system (100) for the temporary storage of items (20), comprising:
- at least one conveyor belt (10) of items (20);
- at least one storage room (30) of said items (20), said at least one storage room (30) comprising a plurality of removable compartments (70) for containing said items (20);
- a mechanical movement unit (40) of said items which is configured for transferring said items (20) from the conveyor belt (10) to said at least one storage room (30), said mechanical movement unit (40) being further configured to transfer said items from said at least one storage room (30) to the conveyor belt (10),
**characterised in that** each compartment of said plurality of compartments (70) comprises a plurality of housings (71) for containing one or more layers of items (20).

2. The system (100) according to claim 1, wherein each housing of such plurality of housings (71) is the same size.

3. The system (100) according to claim 1, wherein each housing of the plurality of housings (71) is a different size.

4. The system (100) according to claim 1, comprising access means (32) to at least one compartment of said at least one storage room (30), said access means (32) being configured to define a filling/emptying position (B) of a compartment.

5. The system (100) according to claim 4, wherein each compartment of said plurality of compartments (70) is configured to adopt an archive position (A), when inside said at least one storage room (30), and a filling/emptying position (B), when it is at such access means (32).

6. The system (100) according to claim 5, wherein such at least one storage room (30) comprises means for moving a compartment of said plurality of compartments (70) from the archive position (A) to the filling/emptying position (B) and vice versa.

7. The system (100) according to claim 6, wherein such moving means are configured to move one compartment independently of the other compartments of the aforesaid plurality of compartments (70).

8. The system (100) according to claim 7, wherein said at least one storage room (30) further comprises an electronic processor configured to automatically operate the means for moving a compartment inside such at least one storage room (30), such electronic processor being configured to store in the respective memory unit information representing the instant of time when a layer of items (20) is accommodated inside one of the housings (71) of a compartment and further information representing the housing (71) in which said same layer of items (20) has been accommodated.

9. The system (100) according to any preceding claim, wherein the plurality of compartments (70) is distributed within said at least one storage room (30) such that the distance between two compartments in the respective archive position (A), in a main extension direction (D) of said at least one storage room (30), is substantially greater than the height of the layer of items (20) accommodated within the compartment.

10. The system (100) according to any preceding claim, wherein said at least one storage room (30) is a tightly sealed environment.

11. The system (100) according to any preceding claim, which works according to a FIFO-logic and is configured to have a maximum tolerance of one compartment.

12. The system (100) according to any preceding claim, further comprising further storage rooms (30), said further storage rooms (30) being analogous to said at least one storage room (30).

13. The system (100) according to claim 12, wherein said at least one storage room (30) and said further storage rooms (30) are distributed such that the mechanical moving unit (40) is substantially arranged in the centre of the automated storage system (100).

## Patentansprüche

1. Automatisiertes Lagerungssystem (100) zur vorübergehenden Lagerung von Gegenständen (20), umfassend:
- wenigstens ein Transportband (10) für Gegenstände (20);
- wenigstens einen Lagerraum (30) für die Gegenstände (20), wobei der wenigstens eine Lagerraum (30) eine Mehrzahl an herausnehmbaren Fächern (70) zum Aufnehmen der Gegenstände (20) umfasst;
- eine mechanische Bewegungseinheit (40) für die Gegenstände, die dafür ausgelegt ist, die Gegenstände (20) von dem Transportband (10) zu dem wenigstens einen Lagerraum (30) zu transferieren, wobei die mechanische Bewegungseinheit (40) ferner dafür ausgelegt ist, die Gegenstände von dem wenigstens einen Lagerraum (30) zu dem Transportband (10) zu transferieren,
**dadurch gekennzeichnet, dass**
jedes Fach der Mehrzahl an Fächern (70) eine Mehrzahl an Aufnahmen (71) zum Aufnehmen einer oder mehrerer Lagen an Gegenständen (20) umfasst.

2. System (100) nach Anspruch 1, wobei jede Aufnahme einer solchen Mehrzahl an Aufnahmen (71) von gleicher Größe ist.

3. System (100) nach Anspruch 1, wobei jede Aufnahme der Mehrzahl an Aufnahmen (71) von einer unterschiedlichen Größe ist.

4. System (100) nach Anspruch 1, umfassend Zugangsmittel (32) zu wenigstens einem Fach des wenigstens einen Lagerraums (30), wobei die Zugangsmittel (32) dafür ausgelegt sind, eine Befüllungs-/Entleerungsposition (B) eines Fachs zu definieren.

5. System (100) nach Anspruch 4, wobei jedes Fach der Mehrzahl an Fächern (70) dafür ausgelegt ist, eine Ausgangsposition (A) einzunehmen, wenn es sich innerhalb des wenigstens einen Lagerraums (30) befindet, und eine Befüllungs-/Entleerungsposition (B), wenn es sich an solchen Zugangsmitteln (32) befindet.

6. System (100) nach Anspruch 5, wobei so ein wenigstens ein Lagerraum (30) Mittel umfasst, um ein Fach der Mehrzahl an Fächern (70) von der Ausgangsposition (A) zu der Befüllungs-/Entleerungsposition (B) und umgekehrt zu bewegen.

7. System (100) nach Anspruch 6, wobei solche Bewegungsmittel dafür ausgelegt sind, ein Fach unabhängig von den anderen Fächern der oben genannten Mehrzahl an Fächern (70) zu bewegen.

8. System (100) nach Anspruch 7, wobei der wenigstens eine Lagerraum (30) ferner einen elektronischen Prozessor umfasst, der dafür ausgelegt ist, die Mittel zum Bewegen eines Fachs in so einem wenigstens einen Lagerraum (30) automatisch zu betreiben, wobei so ein elektronischer Prozessor dafür ausgelegt ist, die jeweilige Information der Speichereinheit einzuspeichern, die den Zeitpunkt repräsentiert, an dem eine Lage der Gegenstände (20) innerhalb einer der Aufnahmen (71) eines Fachs aufgenommen wird und eine weitere Information, welche die Aufnahme (71) repräsentiert, in welche die selbe Lage der Gegenstände (20) aufgenommen wurde.

9. System (100) nach irgendeinem vorhergehenden Anspruch, wobei die Mehrzahl an Fächern (70) innerhalb des wenigstens einen Lagerraums (30) verteilt ist, so dass die Entfernung zwischen zwei Fächern in der jeweiligen Ausgangsposition (A) in einer Haupt-Erstreckungsrichtung (D) des wenigstens einen Lagerraums (30) im Wesentlichen größer als die Höhe der Lage der innerhalb des Fachs aufgenommen Gegenstände (20) ist.

10. System (100) nach irgendeinem vorhergehenden Anspruch, wobei der wenigstens eine Lagerraum (30) eine dicht verschlossene Umgebung darstellt.

11. System (100) nach irgendeinem vorhergehenden Anspruch, das nach einer FIFO-Logik arbeitet und dafür ausgelegt ist, eine Maximaltoleranz eines Fachs aufzuweisen.

12. System (100) nach irgendeinem vorhergehenden Anspruch, ferner umfassend weitere Lagerräume (30), wobei die weiteren Lagerräume (30) analog zu dem wenigstens einen Lagerraum (30) sind.

13. System (100) nach Anspruch 12, wobei der wenigstens eine Lagerraum (30) und die weiteren Lagerräume (30) so verteilt sind, dass die mechanische Bewegungseinheit (40) im Wesentlichen in der Mitte des automatisierten Lagerungssystems (100) angeordnet ist.

## Revendications

1. Système de stockage automatisé (100) pour le stockage temporaire d'articles (20) comprenant :
- au moins une courroie de transport (10) d'articles (20) ;
- au moins un local de stockage (30) desdits articles (20), ledit au moins un local de stockage (30) comprenant une pluralité de compartiments amovibles (70) pour contenir lesdits articles (20) ;
- une unité de déplacement mécanique (40) desdits articles qui est configurée pour transférer lesdits articles (20) de la courroie de transport (10) au dit au moins un local de stockage (30), ladite unité de déplacement mécanique (40) étant en outre configurée pour transférer lesdits articles dudit au moins un local de stockage (30) à la courroie de transport (10),
**caractérisé en ce que** chaque compartiment de ladite pluralité de compartiments (70) comprend une pluralité de logements (71) pour contenir une ou plusieurs couches d'articles (20).

2. Système (100) selon la revendication 1, dans lequel tous les logements de la pluralité de logements (71) ont la même taille.

3. Système (100) selon la revendication 1, dans lequel chaque logement de la pluralité de logements (71) a une taille différente.

4. Système (100) selon la revendication 1, comprenant des moyens d'accès (32) à au moins un compartiment dudit au moins un local de stockage (30), lesdits moyens d'accès (32) étant configurés pour définir une position de remplissage/vidage (B) d'un compartiment.

5. Système (100) selon la revendication 4, dans lequel chaque compartiment de ladite pluralité de compartiments (70) est configuré pour adopter une position d'archivage (A), lorsqu'il est à l'intérieur dudit au moins un local de stockage (30), et une position de remplissage/vidage (B), lorsqu'il est au niveau de ces moyens d'accès (32).

6. Système (100) selon la revendication 5, dans lequel ce dit au moins un local de stockage (30) comprend des moyens pour déplacer un compartiment de ladite pluralité de compartiments (70) de la position d'archivage (A) à la position de remplissage/vidage (B), et vice versa.

7. Système (100) selon la revendication 6, dans lequel ces moyens de déplacement sont configurés pour déplacer un compartiment indépendamment des autres compartiments de la pluralité susmentionnée de compartiments (70).

8. Système (100) selon la revendication 7, dans lequel ledit au moins un local de stockage (30) comprend en outre un processeur électronique configuré pour mettre en oeuvre automatiquement les moyens pour déplacer un compartiment à l'intérieur de ce dit au moins un local de stockage (30), ce processeur électronique étant configuré pour mémoriser, dans l'unité de mémorisation respective, des informations représentant l'instant auquel une couche d'articles (20) est logée à l'intérieur de l'un des logements (71) d'un compartiment et des informations supplémentaires représentant le logement (71) dans lequel ladite susdite couche d'articles (20) a été logée.

9. Système (100) selon l'une quelconque des revendications précédentes, dans lequel la pluralité de compartiments (70) sont répartis dans ledit au moins un local de stockage (30) de sorte que la distance entre deux compartiments à la position d'archivage (A) respective, dans une direction d'extension principale (D) dudit au moins un local de stockage (30), soit sensiblement plus grande que la hauteur de la couche d'articles (20) logés dans le compartiment.

10. Système (100) selon l'une quelconque des revendications précédentes, dans lequel ledit au moins un local de stockage (30) est un environnement très étanche.

11. Système (100) selon l'une quelconque des revendications précédentes, qui fonctionne selon une logique FIFO et qui est configuré pour avoir une tolérance maximum d'un compartiment.

12. Système (100) selon l'une quelconque des revendications précédentes, comprenant en outre des locaux de stockage (30) supplémentaires, lesdites locaux de stockage (30) supplémentaires étant analogues au dit au moins un local de stockage (30).

13. Système (100) selon la revendication 12, dans lequel ledit au moins un local de stockage (30) et lesdits locaux de stockage (30) supplémentaires sont répartis de sorte que l'unité de déplacement mécanique (40) soit sensiblement agencée au centre du système de stockage automatisé (100).
